# EUROPEAN PATENT APPLICATION

(11) **EP 4 742 144 A1**
(43) Date of publication of application: **13.05.2026**
(21) Application number: 24835310.4
(22) Date of filing: 30.06.2024
(51) Int. Cl.: G06T 3/00

(54) **METHOD AND APPARATUS FOR INTERACTION AND PRODUCING SPECIAL EFFECT, AND DEVICE AND STORAGE MEDIUM**

(30) Priority: 03.07.2023 CN 202310807910
(71) Applicant: Beijing Zitiao Network Technology Co., Ltd., Beijing 100190 (CN)
(72) Inventor: YUAN, Qi, Beijing 100028 (CN)
(74) Representative: Isarpatent
(86) International application number: PCT/CN2024/102777
(87) International publication number: WO 2025/007829

(57) **Abstract**

The embodiments of the disclosure relates to a method, apparatus, device and storage medium for interaction and effect generating. The interaction method provided in the disclosure includes: detecting a plurality of reference key points associated with a virtual object to be mounted from a target image; determining a mounting position of the virtual object based on the position information of the plurality of reference key points in the target image; and mounting the virtual object to a mounting position in the target image. Based on the above approach, the embodiments of the disclosure can realize more accurate mounting of the virtual object and improve the interaction experience of the user.

## Description

This application claims the benefit of Chinese Patent Application No. 202310807910.X, entitled "Method, Apparatus, Device And Storage Medium for Interaction and Effect Generation," filed on 07. 03, 2023, the entire content of which is incorporated herein by reference.

### FIELD

Example embodiments of the present disclosure generally relate to the field of computers, and in particular, to methods, apparatuses, devices, and computer-readable storage media for interactions and effect generations.

### BACKGROUND

With the development of computer technologies, the Internet has become an important platform for creating and sharing media content. In a process of creating the media content, video effects and picture effects are creation means frequently used by a user in an authoring process. These effects can enrich the media content created by the user and improve the level of interest of the content.

### SUMMARY

In a first aspect of the present disclosure, an interaction method is provided. The method comprises the following steps: detecting a plurality of reference key points associated with a virtual object to be mounted from a target image; determining a mounting position of the virtual object based on the position information of the plurality of reference key points in the target image; and mounting the virtual object to the mounting position in the target image.

In a second aspect of the present disclosure, a method for generating an effect is provided. The method comprises the following steps: presenting an editing interface for generating a mounting effect; determining an expected mounting position of a virtual object to be mounted based on input information received in the editing interface; determining a plurality of reference key points associated with the expected mounting position, the plurality of reference key points being used for determining a target mounting position of the virtual object during execution of the mounting effect; and generating an effect file corresponding to the mounting effect based on the plurality of reference key points.

In a third aspect of the present disclosure, an interaction apparatus is provided. The apparatus includes: a key point determining module configured to detect a plurality of reference key points associated with a virtual object to be mounted from a target image; a position determining module configured to determine a mounting position of the virtual object based on position information of the plurality of reference key points in the target image; and a mounting module configured to mount the virtual object to the mounting position in the target image.

In a fourth aspect of the present disclosure, an apparatus for generating an effect is provided. The apparatus comprises: an interface presenting module configured to present an editing interface for generating a mounting effect; a position marking module configured to determine an expected mounting position of the virtual object to be mounted based on input information received in the editing interface; a key point marking module configured to determine a plurality of reference key points associated with the expected mounting position, the plurality of reference key points being used for determining a target mounting position of the virtual object during execution of the mounting effect; and a file generating module configured to generate an effect file corresponding to the mounting effect based on the plurality of reference key points.

In a fifth aspect of the present disclosure, an electronic device is provided. The apparatus includes at least one processing unit; and at least one memory coupled to the at least one processing unit and storing instructions for execution by the at least one processing unit. The instructions, when executed by the at least one processing unit, cause the device to perform the method of the first aspect and/or the second aspect.

In a sixth aspect of the present disclosure, a computer-readable storage medium is provided. The computer-readable storage medium stores a computer program, and the computer program is executable by the processor to implement the method of the first aspect and/or the second aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The abovementioned and other features, advantages, and aspects of various embodiments of the present disclosure will become more apparent from the following detailed description with reference to the accompanying drawings. In the drawings, the same or similar reference numbers refer to the same or similar elements, wherein:
FIG. 1A and FIG. 1B illustrate schematic diagrams of a traditional mounting virtual object;
FIG. 2 illustrates a schematic diagram of an example environment in which embodiments of the present disclosure may be implemented;
FIG. 3A to FIG. 3D illustrate schematic diagrams of mounting a virtual object according to some embodiments of the present disclosure;
FIG. 4 illustrates a schematic diagram of mounting a virtual object according to some other embodiments of the present disclosure;
FIG. 5A to FIG. 5C illustrate schematic diagrams of generating a mounting effect according to some embodiments of the present disclosure;
FIG. 6 illustrates a flowchart of an example interaction process according to some embodiments of the present disclosure;
FIG. 7 illustrates a flowchart of an example process for generating an effect according to some embodiments of the present disclosure;
FIG. 8 illustrates a schematic structural block diagram of an interaction apparatus according to some embodiments of the present disclosure;
FIG. 9 illustrates a schematic structural block diagram of an apparatus for generating an effect according to some embodiments of the present disclosure; and
FIG. 10 illustrates a block diagram of an electronic device capable of implementing various embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms, and should not be interpreted as limited to the embodiments described in this specification, on the contrary, these embodiments are provided for a more thorough and complete understanding of the present disclosure. It should be understood that the accompanying drawings and embodiments of the present disclosure are only for the purposes of illustration and are not intended to limit the scope of the present disclosure.

It should be noted that the title of any section/subsection provided herein is not limiting. Various embodiments are described throughout and any type of the embodiments may be included in any section/subsection. Furthermore, the embodiments described in any section/subsection may be combined in any manner with the same section/subsection and/or any other embodiment described in different sections/subsections.

In the description of the embodiments of the present disclosure, the terms "including" similar terms would be appreciated as open-ended inclusion, that is "including but not limited to". The term "based on" would be appreciated as "at least partially based on". The terms "one embodiment" or "the embodiment" would be appreciated as "at least one embodiment". The term "some embodiments" would be appreciated as "at least some embodiments". Other explicit and implicit definitions may also be included below. The terms "first," "second," etc may refer to different or identical objects. Other explicit and implicit definitions may also be included below.

Embodiments of the present disclosure may relate to user data, acquisition and/or use of data, and the like. These aspects shall comply with the requirements of corresponding laws, regulations and relevant provisions . In the embodiments of the present disclosure, the collection, acquisition, processing, manufacturing, forwarding, use of all data and the like are carried out with the knowledge and consent of the users. Accordingly, the implementation of embodiments of the present disclosure, users should be informed of the type, the scope of use, the use scenario, etc., of the involved data or information in an appropriate manner and provide authorization in accordance with relevant laws and regulations. The specific ways of being informed and providing authorization may vary according to actual circumstances and application scenarios, and the scope of this disclosure is not limited in this regard.

In the solutions and embodiments in this disclosure, if personal information processing is involved, it will be carried out based on legitimate grounds (such as obtaining consent from the data subject, or as required to fulfill a contract, etc.) and will be performed only within a specified or agreed scope. If users decline the processing of personal information beyond what is essential for basic functionalities, their utilization of these basic features remains uninterrupted.

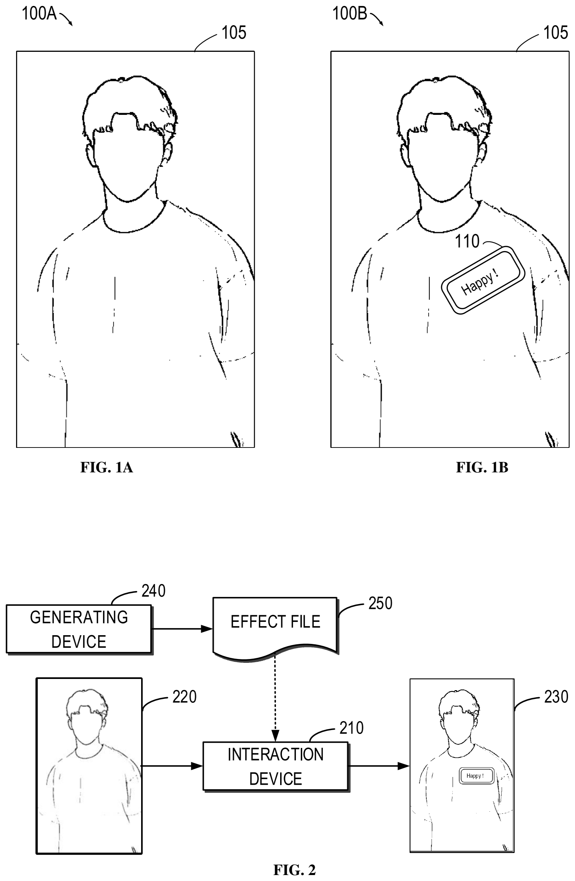

Some effects can support mounting some virtual objects at predetermined positions in the image. As shown in FIGS. 1A and 1B, such an example effect may, for example, support mounting the virtual object 110 at a predetermined position of the image 105.

However, traditional mounting effects rely on specific key points identified in the image (also referred to as feature points). However, taking the human body object shown in FIG. 1A as an example, the key point position that can be identified in the human body object may be limited. For example, there may be no matching key points at the chest position of the human body. This causes one not being able to effectively mount the virtual object to the chest position of the human body.

In addition, in a mounting solution based on specific key point(s), orientation information of the virtual object is usually only dependent on the orientation(s) of the key point. This causes the orientation of the mounted virtual object being inappropriate, e.g., being inconsistent with gesture(s) of the human body.

Therefore, such mounting effects cannot meet interactive needs of people.

In one aspect, there is provided an interaction solution according to some embodiments of the present disclosure. According to the solution, a plurality of reference key points associated with the virtual object to be mounted may be detected from the target image. Further, the mounting position of the virtual object may be determined based on the position information of the plurality of reference key points in the target image. Correspondingly, the virtual object may be mounted to the mounting position in the target image.

Based on the above approach, embodiments of the present disclosure can realize more accurate mounting of the virtual object and improve the interaction experiences of the user. In addition, embodiments of the present disclosure can also enrich support of virtual object mounting at positions without key points (e.g., chest etc.), thereby improving the interaction experiences.

In another aspect, there is provided an effect generating solution according to some embodiments of the present disclosure. According to the solution, an editing interface for generating the mounting effect may be presented. In addition, the expected mounting position of the virtual object to be mounted may be determined based on the input information received in the editing interface. Further, a plurality of reference key points associated with the expected mounting position may be determined, the plurality of reference key points being used to determine a target mounting position of the virtual object during execution of the mounting effect. Correspondingly, the effect file corresponding to the mounting effect may be generated based on the plurality of reference key points.

Based on the above approach, embodiments of the present disclosure can support the user to create the mounting effect mounted at the non-key point position, thereby improving the flexibility of the user to create the mounting effect.

Various example implementations of this solution are described in detail below with reference to the accompanying drawings.

### Example Environment

FIG. 2 illustrates a schematic diagram of an example environment 200 in which embodiments of the present disclosure can be implemented. As shown in FIG. 2, the example environment 200 may include an interaction device 210. As will be described in detail below, the interaction device 210 may apply the mounting effect to the target image 220, to provide the media content 230 with the mounting effect.

In some embodiments, the target image 220 may include, for example, a static image (e.g., a photo) or a dynamic image (e.g., a video) acquired with an image acquisition device. For example, the user may, for example, take a picture or a video by using the image acquisition device carried by the interaction device 210, and may apply the mounting effect on such a picture or a video.

In some further embodiments, the target image 220 may also include, for example, an image file (e.g., a picture file or a video file) that has been generated. The user may, for example, select an locally existing image file of the interaction device 210 to apply the mounting effect. Alternatively, the user may also upload the image file to be processed to the interaction device 210, to apply the mounting effect.

In other embodiments, such target image 220 may also be, for example, a static image or a dynamic image having a target style generated based on the generated image file. For example, the user may upload a local image/video to the interaction device 210 and generate another image or video corresponding to the generated image or video by the interaction device 210 and/or other suitable electronic device by using a style transformation tool . For example, the picture uploaded by the user may be a realistic picture, and the generated image may be, for example, a cartoon style picture. The present disclosure is not intended to limit the transformation process of the images.

In some embodiments, the interaction device 210 may be any type of mobile terminal, a fixed terminal, or a portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the electronic device 110 can also support any type of interface for a user (such as a "wearable" circuit, etc. ).

In some further examples, the interaction device 210 may also be an independent physical server, or may be a server cluster or a distributed system composed of multiple physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms.

In some embodiments, the interaction device 210 may also apply the mounting effect to the target image 220 based on the post effects file 250. As shown in FIG. 2, as will be described in details below, such effect file may be generated, for example, by the generating device 240.

It should be understood that, although the generating device 240 and the interacting device 210 are shown as separate blocks in FIG. 2, the generating device 240 and the interacting device 210 may be the same or different electronic devices.

It should be understood that the structures and functions of the various elements in the environment 200 are described for exemplary purposes only and do not imply any limitation to the scope of the present disclosure.

Some example embodiments of the present disclosure will be described below with continued reference to the accompanying drawings.

### Example Mounting Specials

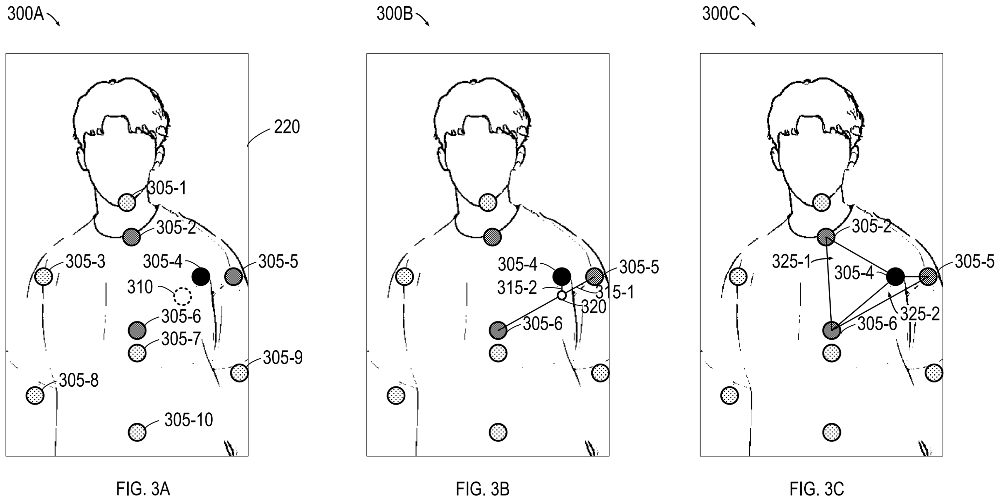

The effect interaction process will be described with reference to FIGS. 3A to 3D according to some embodiments of the present disclosure .

FIG. 3A illustrates a schematic diagram of an interaction process according to some embodiments of the present disclosure. As shown in FIG. 3A, the interaction device 210 may obtain the target image 220, and may detect a plurality of key points, for example, the key points 305-1 to 305-10 (individually or collectively referred to as the key point(s) 305), from the target image 220.

It should be understood that the key points 305 may also have different types according to different objects included in the target image 220. Taking the target image 220 as an example, the key point 305 may include, for example, detected human body key points (for example, skeleton key points).

It should be understood that any suitable key point detection technique may be used to identify the key points 305 in the target image 220, examples of the techniques may include, but may not limited to: Skeleton2d, avatar3d, etc.

Further, the interaction device 210 may determine, from the plurality of key points 305, a plurality of reference key points associated with the virtual object to be mounted.

In some embodiments, the plurality reference key points may be determined based on the expected mounting position of the virtual object. As shown in FIG. 3A, the virtual object corresponds to the expected mounting position 310. The expected mounting position 310 does not overlap with the detectable plurality of key points 305.

In some embodiments, the expected mounting position 310 may include, for example, a specific point, or may include a specific region. For example, the expected mounting position 310 may indicate a left chest region of a human body subject.

Further, the interaction device 210 may determine, from the plurality of key points 305, a plurality of key points with distances to the expected mounting position 310 being smaller than a threshold as the reference key points. Taking FIG. 3A as an example, the determined reference key points may include, for example, reference key points 305-4 (shoulder points), reference key points 305-2 (neck points), reference key points 305-5 (upper arm points), and reference key points 305-6 (spine points).

Alternatively or additionally, the plurality of reference key points may also include points specified during a process of generating an effect file. As will be described in detail below with reference to the effect generating process, for example, a plurality of reference key points to be detected may also be specified in the process of generating the effect file.

As another embodiment, the interaction device 210 may for example also perform the detection of the plurality of expected reference key points, without performing the detection of all key points.

Further, the interaction device 210 may determine the mounting position of the virtual object based on the plurality of reference key points.

In some embodiments, the interaction device 210 may determine the mounting position based on two reference key points among the plurality of reference key points. As shown in FIG. 3B, the interaction device 210 may, for example, determine the mounting position based on the reference key point 305-6 and the reference key point 305-5.

As an example, the interaction device 210 may construct the first reference line 315-1 based on the reference key point 305-6 and the reference key point 305-5, and determine the midpoint of the first reference line 315-1 as the mounting position.

As another example, the interaction device 210 may, for example, further determine the target position in the reference line as the mounting position based on the position description information. The position description information may, for example, indicate a relationship between a first distance from the target position to be determined to the reference key point 305-6 and a second distance from the target position to the reference key point 305-5.

For example, the position description information may be maintained within the effect file 250, which may, for example, indicate that the distance from the target position to be determined to the reference key point 305-6 is equal to the distance from the target position to the reference key point 305-5. In this case, the determined target position may be the midpoint of the reference line.

As another example, the position description information may, for example, indicate a ratio (e.g., 2: 1) between the distance from the target position to be determined to the reference key point 305-6 and the distance from the target position to the reference key point 305-5. Therefore, the interaction device 210 may determine the target position on the first reference line 315-1 as the mounting position according to the ratio.

In some embodiments, as will be described in detail below, the position description information may , for example, be determined based on interactions in the process of generating the effect.

In some embodiments, the interaction device 210 may also determine the mount position based on a greater number of reference key points. Correspondingly, the position description information may further indicate a respective influence weight of each reference key point on the mounting position. Further, the interaction device 210 may determine the target position to be mounted based on a weighted interpolation operation of the plurality of reference key points.

In some embodiments, the interaction device 210 may further determine the target position to be mounted based on a third reference key point (e.g., the reference key point 305-4) among the plurality of reference key points.

For example, the interaction device 210 may construct the second reference line 315-2 based on the reference key point 305-4 and the target direction information. In some embodiments, the reference key point 305-4 may be the reference key point with the shortest distance to the expected mounting position 310.

In some embodiments, the target direction information used to construct the second reference key point 315-2 may include, for example, preset first direction information. For example, considering that in most cases of the upper human body in the target image 220 are in vertical states, the first direction information may include a vertical direction in the target image 220.

As another embodiment, the target direction information used to construct the second reference key point 315-2 may be, for example, second direction information determined based on a gesture detection of a target object (e.g., a human body) in the target image 220. For example, the interaction device 210 may analyze the orientation of the human spine in the target image 220, and determine the orientation of the human spine as the second direction information.

Further, the interaction device 210 may determine the mounting position 320 of the virtual object based on an intersection of the first reference line 315-1 and the second reference line 315-2. Correspondingly, the interaction device 210 may mount the virtual object to the mounting position 320 of the target image 220.

Based on the abovementioned approach, embodiments of the present disclosure can determine the mounting position of the virtual object via the plurality of reference key points, so that the virtual object can be mounted to the region where the key point detection cannot be covered, thereby improving the flexibility of the effect interaction.

In some embodiments, the interaction device 210 may further determine a target orientation of the virtual object based on the position information of the plurality of reference key points, and may complete the mounting of the virtual object based on the determined target orientation.

Specifically, the interaction device 210 may determine at least one reference plane based on the plurality of reference key points, where each reference plane is determined based on at least three of the plurality of reference key points. For example, in the example of FIG. 3C, the interaction device 210 may determine, for example, a first plane 325-1 on which a triangle formed by the reference key point 305-2, the reference key point 305-6, and the reference key point 305-4 is located; and may determine a second plane 325-2 based on a triangle formed by the reference key point 305-5, the reference key point 305-6, and the reference key point 305-4.

Correspondingly, the interaction device 210 may determine the orientation information (also referred to as first orientation information) of the first plane 325 -1 and the second plane 325-2, and determine the target orientation of the virtual object according to the orientation information. For example, the interaction device 210 may determine the target orientation of the virtual object according to the average value of the normal directions of the first plane 325-1 and the second plane 325-2.

In some embodiments, when determining the target orientation of the virtual object, the interaction device 210 may further consider the orientation information of the target reference key point in the plurality of reference key points. The target reference key point may be, for example, a reference key point with the distance to the expected mounting position of the virtual object being less than a preset distance, for example, the reference key point 305-4 with the shortest distance.

Further, the interaction device 210 may obtain the orientation information (also referred to as the second orientation information) of the reference key point 305-4. It should be understood that the orientation information may be determined based on, for example, a key point identification process. Further, the interaction device 210 may determine the target orientation of the virtual object by using the first orientation information and the second orientation information.

For example, the interaction device 210 may convert the rotation quaternion of the reference key point 305-4 into a direction vector, and may normalize the direction vector with the average value of the normal vector of the first plane 325-1 and the normal vector of the second plane, and may eventually determine the target orientation of the virtual object.

Based on this approach, embodiments of the present disclosure may enable the mounted virtual object to more matching to the gesture of the target object (e.g., the human body) in the target image, thereby improving the interaction experience of the effect.

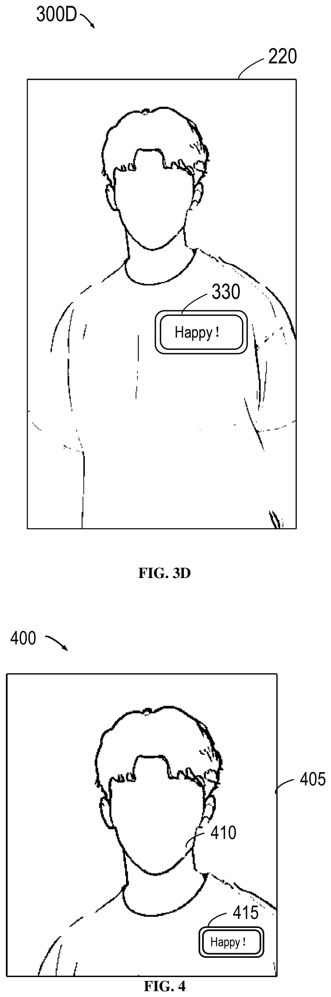

For example, as shown in FIG. 3D, the interaction device 210 may mount the virtual object 330 to the target image 220 based on the determined mounting position 320 and the target orientation, thereby completing the interaction of mounting the effect.

It can be seen that, compared to the mounting effect shown in FIG. 1B, embodiment of the present disclosure can, on one hand, support the mounting within the non-key point coverage region, and on the other hand, can improve the authenticity of the mounting of the virtual object. Therefore, the interaction experience of mounting the effect can be improved.

In some further embodiments, for an example in which the expected mounting position is the chest, not all the reference key points may be detected on the target image acquired by the interaction device 210, resulting in a mounting failure.

Therefore, before determining the mounting position by using the plurality of reference key points, the interaction device 210 may, for example, detect the facial region from the target image, that is, the region corresponding to the face of the person in the target image. Further, the interaction device 210 may determine a proportion of the facial region in the target image. Taking FIG. 4 as an example, the interaction device 210 may detect the facial region 410 from the target image 405, and determine the proportion of the facial region 410 in the target image 405.

Further, if the proportion is less than or equal to the threshold, the interaction device 210 may determine that a complete reference key point can be detected, and can complete the mounting of the virtual object by using the process described above.

On the contrary, if the proportion is greater than the threshold, the interaction device 210 may determine that it is difficult to complete the mounting of the virtual object according to the plurality of reference key points. In this case, the interaction device 210 may, for example, directly determine the position of the predetermined reference key point in the key point identified in the target image 405 as the mounting position of the virtual object.

For example, the interaction device 210 may determine the reference key point 305-4 shown in FIG. 3A as the mounting position. The reference key point may be, for example, the key point having the shortest distance to the expected mounting position the virtual object.

Alternatively, the reference key points may also be key points specified in the process of generating the effect file.

In some embodiments, the interaction device 210 may further directly use the orientation information of the reference key point 305-5 as the target orientation of the virtual object 415.

As another example, in order to ensure the presentation effect of the mounting effect, when the proportion of the facial region is greater than the threshold, the interaction device 210 may also adjust the size of the virtual object 415, so that it can be completely presented in the target image 405.

In this way, embodiments of the present disclosure may further ensure successful mounting in some special scenarios, and may improve the stability and flexibility of the interaction of the mounting effect.

### Effect Generation Examples

The process for generating the mounting effect files as discussed above will be further described below.

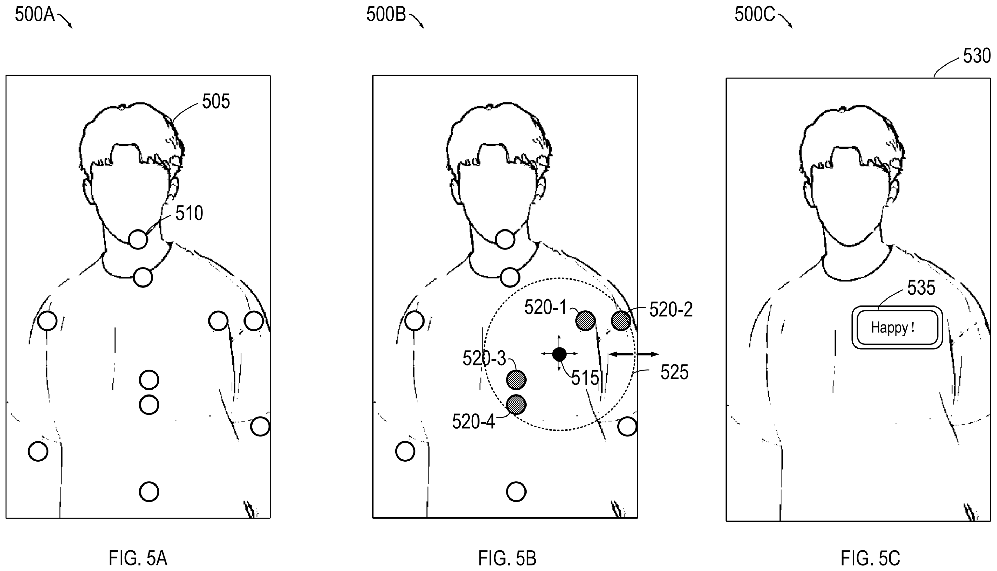

FIG. 5A illustrates an editing interface 500A for generating the mounting effect. The editing interface 500A may be provided, for example, by the generating device 240 shown in FIG. 2.

As shown in FIG. 5A, the editing interface 500A may be, for example, a reference model 505 for generating the mounting effect. It should be understood that the reference model 505 may be used, for example, to represent a basic style of the target object to be mounted, and the present disclosure is not intended to limit the specific form of the reference model 505.

Further, the editing device 500A may also be associated with the reference model 505, for example, to present the plurality of key points 510 that may be used to generate the mounting effect. Taking the human body as the example of the target object, the plurality of key points 510 may include a plurality of preset key points of the human body.

Further, as shown in FIG. 5B, the generating device 240 may obtain the input information received in the editing interface, and may determine the expected mounting position 515 of the virtual object to be mounted.

For example, the user may specify the expected mounting position 515 via a clicking operation, or may adjust the expected mounting position by moving the indicator of the expected mounting position 515. The present disclosure is not intended to limit the specific interaction format in specifying the expected mounting position 515.

Further, the generating device 240 may determine the plurality of reference key points based on the expected mounting position 515. The plurality of reference key points may include, for example, a reference key point 520-1, a reference key point 520-2, a reference key point 520-3, and a reference key point 520-4 shown in FIG. 5B.

In some embodiments, the generating device 240 may determine the plurality of key points with the distance to the expected mounting position 515 being less than the threshold as the reference key points. Additionally, the threshold distance may be an initially set distance, or may be a distance determined based on the input of the user.

For example, the generating device 240 may indicate, in the process of determining the reference key point, the range 525 for determining the reference key point by using a pattern style. The user may also adjust the range 525 via a dragging operation, to add or remove one or more reference key points.

Additionally, the generating device 240 may further highlight the plurality of reference key points (for example, the reference key points 520-1 to 520-4) determined in real time to, for example, distinguish the key points that are not determined as the reference key points.

Alternatively, in addition to adjusting the range of the 525, the user may also add or remove one or more reference key points via a selecting operation on the key points.

After determining the plurality of reference key points, the generating device 240 may determine the mounting position and/or the target orientation of the virtual object based on the mounting logic that is based on the plurality of reference key points as discussed above with reference to FIGS. 3A to 3D. The present disclosure will not repeat herein.

In some embodiments, the generating device 240 may also present, in the editing interface, a real-time mounting effect corresponding to the determined plurality of reference key points. As shown in FIG. 5C, the generating device 240 may mount the predetermined virtual object 535 to the sample image 530, for example, based on the plurality of reference key points determined in the editing interface.

It should be understood that such virtual objects 535 and/or sample images 530 may be added or uploaded by the user in the effect generating process.

Further, after receiving the confirmation about the plurality of reference key points, the generating device 240 may generate the effect file corresponding to the mounting effect based on the plurality of reference key points.

For example, the effect file may maintain the identifiers of the plurality of reference key points used to determine the mounting position and/or the target orientation of the virtual object, to detect the plurality of reference key points in the effect execution process, to complete the mounting effect.

In some embodiments, as discussed above, the generating device 240 may also determine a plurality of distances from the expected mounting position 515 to the plurality of reference key points (e.g., the reference key points 520-1 to the reference key points 520-4), and may generate distance description information based on the plurality of distances, as discussed above. The distance description information may be used to indicate relationships between the plurality of distances, and the distance description information is used to determine the target mounting position of the virtual object during the execution process of the mounting effect.

The distance description information may, for example, indicate the influence weight of the plurality of reference key points 520-1 to 520-4 with respect to the mounting position to be determined, so that the mounting position of the virtual object may be supported by weight based interpolation.

By maintaining the distance description information in the effect file, the embodiments of the present disclosure can support the determining the mounting position based on the positions of the plurality of reference key points in the effect application process discussed above.

### Example Processes

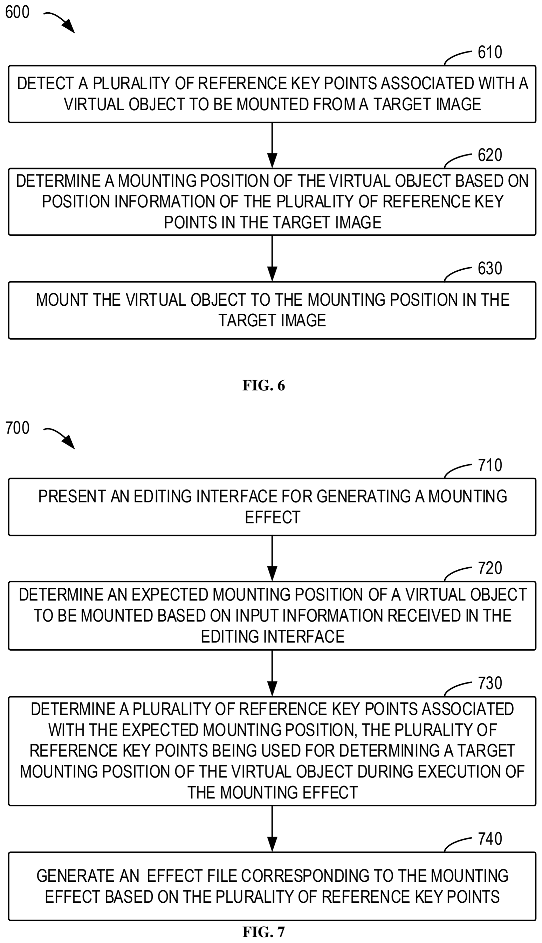

FIG. 6 illustrates a flowchart of an example interaction process 600 according to some embodiments of the present disclosure. Process 600 may be implemented at the interaction device 210. The process 600 is described below with reference to FIG. 2.

As shown in FIG. 6, at block 610, the interaction device 210 detects, from a target image, a plurality of reference key points associated with the virtual object to be mounted.

In block 620, the interaction device 210 determines a mounting position of the virtual object based on the position information of the plurality of reference key points in the target image.

At block 630, the interaction device 210 mounts the virtual object to the mounting position in the target image.

In some embodiments, the mounting position is the target mounting position, and detecting the plurality of reference key points associated with the virtual object to be mounted from the target image includes: determining the plurality of reference key points from the target image based on an expected mounting position of the virtual object, distances from the plurality of reference key points to the expected mounting position being less than a first threshold.

In some embodiments, the plurality of reference key points includes at least a first reference key point and a second reference key point, and determining the mounting position of the virtual object based on the position information of the plurality of reference key points in the target image includes: determining a first reference line based on the first reference key point and the second reference key point; and determining the mounting position of the virtual object based on the first reference line.

In some embodiments, the determining the mounting position of the virtual object based on the first reference line includes: determining a target position on the first reference line as the mounting position according to preset distance description information, where the distance description information indicates a relationship between a first distance from the target position to the first reference key point and a second distance from the target position to the second reference key point.

In some embodiments, the plurality of reference key points further include a third reference key point, and determining the mounting position of the virtual object based on the first reference line includes: determining a second reference line based on the third reference key point and the target direction information; and determining the mounting position based on an intersection point of the first reference line and the second reference line.

In some embodiments, the third reference key point is a reference key point in the plurality of reference key points that has the shortest distance to the expected mounting position of the virtual object.

In some embodiments, the target direction information includes: preset first direction information; or second direction information determined based on a gesture of a target object in the target image.

In some embodiments, mounting the virtual object to the mounting position in the target image includes: determining a target orientation of the virtual object based on the position information of the plurality of reference key points; and mounting the virtual object to the mounting position in the target image according to the target orientation.

In some embodiments, determining the target orientation of the virtual object based on the position information of the plurality of reference key points comprises: determining at least one reference plane based on the plurality of reference key points, where each reference plane is determined based on at least three reference key points in the plurality of reference key points; and determining the target orientation of the virtual object based on first orientation information of the at least one reference plane.

In some embodiments, the determining a target orientation of the virtual object based on the first orientation information of the at least one reference plane includes: determining second orientation information of a target reference key point in the plurality of reference key points, a distance from the target reference key point to the expected mounting position of the virtual object being less than a preset distance; and determining the target orientation of the virtual object based on the first orientation information and the second orientation information.

In some embodiments, determining the mounting position of the virtual object based on the position information of the plurality of reference key points in the target image includes: detecting the facial region from the target image; and determining the mounting position of the virtual object based on the position information of the plurality of reference key points in the target image, in response to a proportion of the facial region in the target image being less than or equal to a threshold.

In some embodiments, the process 600 further includes: determining a position of a predetermined reference key point in the plurality of reference key points as the mounting position of the virtual object, in response to the proportion of the facial region in the target image being greater than the threshold.

In some embodiments, the process 600 further includes: determining an orientation of a predetermined reference key point of the plurality of reference key points as a target orientation of the virtual object.

In some embodiments, the predetermined reference key point is a reference key point that has the shortest distance to an expected mounting position distance from the plurality of reference key points of the virtual object.

In some embodiments, the target image includes: a static image or a dynamic image acquired by the image acquisition device; an uploaded image file; or an image corresponding to the target style generated based on the uploaded image file.

FIG. 7 illustrates a flowchart of an example process 700 for generating an effect according to some embodiments of the present disclosure. Process 700 may be implemented at the generating device 240. The process 700 is described below with reference to FIG. 2.

As shown in FIG. 7, at block 710, the generating device 240 presents an editing interface for generating a mounting effect.

At block 720, the generating device 240 determines an expected mounting position of the virtual object to be mounted based on the input information received in the editing interface.

At block 730, the generating device 240 determines a plurality of reference key points associated with the expected mounting position, the plurality of reference key points being used to determine a target mounting position with the virtual object during the mount effect execution.

At block 740, the generating device 240 generates an effect file corresponding to the mounting effect based on the plurality of reference key points.

In some embodiments, the editing interface presents a reference model and a plurality of key points corresponding to the reference model, and determining the plurality of reference key points associated with the expected mounting position includes: determining, from the plurality of key points, a plurality of reference key points having distances to the expected mounting position less than a threshold distance.

In some embodiments, the threshold distance is determined based on user input.

In some embodiments, the process 700 further includes: in the editing interface, highlighting a plurality of reference key points of the plurality of key points.

In some embodiments, the process 700 further includes: determining a plurality of distances from the expected mounting position to the plurality of reference key points; and generating distance description information based on the plurality of distances, where the distance description information is used to indicate a relationship between the plurality of distances, and the distance description information is used to determine a target mounting position of the virtual object during execution of the mounting effect.

### Example Apparatus and Apparatus

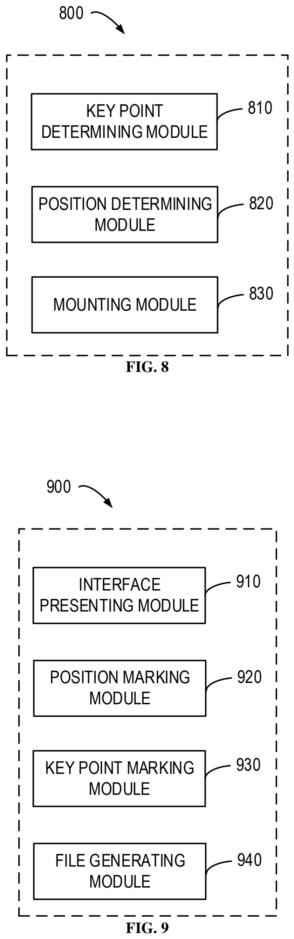

Embodiments of the present disclosure also provide a corresponding apparatus for implementing the above method or process. FIG. 8 illustrates a schematic structural block diagram of an example interaction apparatus 800 according to some embodiments of the present disclosure. The apparatus 800 may be implemented or included in the interaction device 210. The various modules/components in the apparatus 800 may be implemented by hardware, software, firmware, or any combination thereof.

As shown in FIG. 8, the apparatus 800 includes a key point determining module 810 configured to detect a plurality of reference key points associated with a virtual object to be mounted from a target image; a position determining module 820 configured to determine a mounting position of the virtual object based on the position information of the plurality of reference key points in the target image; and a mounting module 830 configured to mount the virtual object to a mounting position in the target image.

In some embodiments, the mounting position is the target mounting position, and the key point determining module 810 is further configured to: determine a plurality of reference key points from the target image based on the expected mounting position of the virtual object, where a distance from the plurality of reference key points to the expected mounting position is less than the first threshold.

In some embodiments, the plurality of reference key points includes at least a first reference key point and a second reference key point, and the position determination module 820 is further configured to: determine a first reference line based on the first reference key point and the second reference key point; and determine a mounting position of the virtual object based on the first reference line.

In some embodiments, the position determining module 820 is further configured to determine a target position on the first reference line as the mounting position according to the preset distance description information, where the distance description information indicates a relationship between the first distance from the target position to the first reference key point and the second distance from the target position to the second reference key point.

In some embodiments, the plurality of reference key points further include a third reference key point, and the position determination module 820 is further configured to: determine a second reference line based on the third reference key point and the target direction information; and determine the mounting position based on an intersection of the first reference line and the second reference line.

In some embodiments, the third reference key point is a reference key point closest to an expected mounting position distance from the plurality of reference key points to the virtual object.

In some embodiments, the target direction information includes: preset first direction information; or second direction information determined based on a posture of the target object in the target image.

In some embodiments, the mounting module 830 is further configured to: determine a target orientation of the virtual object based on the position information of the plurality of reference key points; and mount the virtual object to the mounting position in the target image according to the target orientation.

In some embodiments, the mounting module 830 is further configured to: determine at least one reference plane based on the plurality of reference key points, where each reference plane is determined based on at least three of the plurality of reference key points; and determine a target orientation of the virtual object based on the first orientation information of the at least one reference plane.

In some embodiments, the mounting module 830 is further configured to: determine second orientation information of a target reference key point of the plurality of reference key points, where a distance from the target reference key point to an expected mounting position of the virtual object is less than a preset distance; and determine a target orientation of the virtual object based on the first orientation information and the second orientation information.

In some embodiments, the position determining module 820 is further configured to: detect the facial region from the target image; and in response to the proportion of the facial region in the target image being less than or equal to the threshold, determine the mounting position of the virtual object based on the position information of the plurality of reference key points in the target image.

In some embodiments, the position determining module 820 is further configured to: in response to the proportion of the facial region in the target image being greater than the threshold, determine the position of the predetermined reference key point in the plurality of reference key points as the mounting position of the virtual object.

In some embodiments, the mounting module 830 is further configured to determine an orientation of a predetermined reference key point of the plurality of reference key points as a target orientation of the virtual object.

In some embodiments, the predetermined reference key point is a reference key point closest to an expected mounting position distance from the plurality of reference key points to the virtual object.

In some embodiments, the target image includes: a static image or a dynamic image acquired by the image acquisition device; an uploaded image file; or an image corresponding to the target style generated based on the uploaded image file.

Embodiments of the present disclosure also provide a corresponding apparatus for implementing the above method or process. FIG. 9 illustrates a schematic structural block diagram of an example apparatus 900 for generating an effect according to some embodiments of the present disclosure. The apparatus 900 may be implemented or included in the generating device 240. The various modules/components in the apparatus 900 may be implemented by hardware, software, firmware, or any combination thereof.

As shown in FIG. 9, the apparatus 900 includes an interface presentation module 910 configured to present an editing interface for making a mounting effect; a position marking module 920 configured to generate an expected mounting position of the virtual object to be mounted based on the input information received in the editing interface; a key point marking module 930 configured to determine a plurality of reference key points associated with the expected mounting position, the plurality of reference key points being used for determining a target mounting position of the virtual object during execution of the mounting effect; and a file generating module 940 configured to generate an effect file corresponding to the mounting effect based on the plurality of reference key points.

In some embodiments, the editing interface presents a reference model and a plurality of key points corresponding to the reference model, and the key point marking module 930 is further configured to determine, from the plurality of key points, a plurality of reference key points of which distance to the expected mounting position is less than a threshold distance.

In some embodiments, the threshold distance is determined based on user input.

In some embodiments, the interface presentation module 910 is further configured to: in the editing interface, highlight a plurality of reference key points of the plurality of key points.

In some embodiments, the file generating module 940 is further configured to: determine a plurality of distances from the expected mounting position to the plurality of reference key points; and generate distance description information based on the plurality of distances, where the distance description information is used to indicate a relationship between the plurality of distances, and the distance description information is used to determine the target mounting position of the virtual object during the execution of the mounting effect.

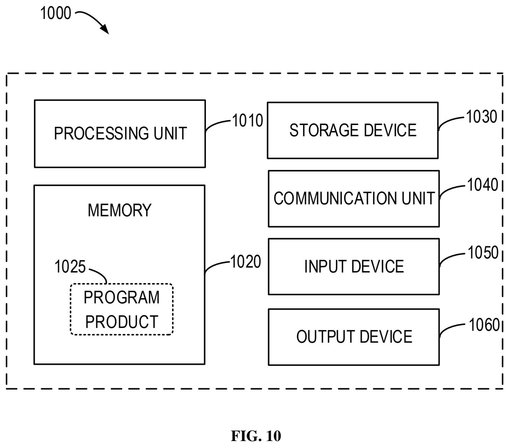

FIG. 10 illustrates a block diagram of an electronic device 1000 in which one or more embodiments of the present disclosure may be implemented. It should be understood that the electronic device 1000 illustrated in FIG. 10 is merely exemplary and should not constitute any limitation on the functionality and scope of the embodiments described herein. The electronic device 1000 shown in FIG. 10 may be configured to implement the electronic device 110 in FIG. 1.

As shown in FIG. 10, the electronic device 1000 is in the form of a general-purpose electronic device. Components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and capable of performing various processes according to programs stored in the memory 1020. In multiprocessor systems, multiple processing units execute computer-executable instructions in parallel to improve parallel processing capabilities of electronic device 1000.

Electronic device 1000 typically includes a plurality of computer storage media. Such media may be any available media accessible to the electronic device 1000, including, but not limited to, volatile and non-volatile media, removable and non-removable media. The memory 1020 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1030 may be a removable or non-removable medium and may include a machine-readable medium, such as a flash drive, magnetic disk, or any other medium, which may be capable of storing information and/or data (e.g., training data for training) and may be accessed within electronic device 1000.

The electronic device 1000 may further include additional removable/non-removable, volatile/non-volatile storage media. Although not shown in FIG. 10, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1020 may include a computer program product 1025 having one or more program modules configured to perform various methods or actions of various embodiments of the present disclosure.

The communication unit 1040 is configured to communicate with another electronic device through a communication medium. Additionally, the functionality of components of the electronic device 1000 may be implemented in a single computing cluster or multiple computing machines capable of communicating over a communication connection. Thus, the electronic device 500 may operate in a networked environment using logical connections with one or more other servers, network personal computers (PCs), or another network node.

The input device 1050 may be one or more input devices, such as a mouse, a keyboard, a trackball, or the like. The output device 1060 may be one or more output devices, such as a display, a speaker, a printer, or the like. The electronic device 1000 may also communicate with one or more external devices (not shown) through the communication unit 1040 as needed, external devices such as storage devices, display devices, etc. , communicate with one or more devices that enable a user to interact with the electronic device 1000, or communicate with any device (e.g., a network card, a modem, etc. ) that enables the electronic device 1000 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. An interaction method, comprising:
detecting a plurality of reference key points associated with a virtual object to be mounted from a target image;
determining a mounting position of the virtual object based on position information of the plurality of reference key points in the target image; and
mounting the virtual object to the mounting position in the target image.

2. The method of claim 1, wherein the mounting position is a target mounting position, and detecting the plurality of reference key points associated with the virtual object to be mounted from the target image comprises:
determining the plurality of reference key points from the target image based on an expected mounting position of the virtual object, distances from the plurality of reference key points to the expected mounting position being less than a first threshold.

3. The method of claim 1, wherein the plurality of reference key points comprises at least a first reference key point and a second reference key point, and determining the mounting position of the virtual object based on the position information of the plurality of reference key points in the target image comprises:
determining a first reference line based on the first reference key point and the second reference key point; and
determining the mounting position of the virtual object based on the first reference line.

4. The method of claim 3, wherein determining the mounting position of the virtual object based on the first reference line comprises:
determining a target position on the first reference line as the mounting position according to preset distance description information, wherein the distance description information indicates a relationship between a first distance from the target position to the first reference key point and a second distance from the target position to the second reference key point.

5. The method of claim 3, wherein the plurality of reference key points further comprises a third reference key point, and determining the mounting position of the virtual object based on the first reference line comprises:
determining a second reference line based on the third reference key point and target direction information; and
determining the mounting position based on an intersection of the first reference line and the second reference line.

6. The method of claim 5, wherein the third reference key point is a reference key point in the plurality of reference key points that has the shortest distance to the expected mounting position of the virtual object.

7. The method of claim 5, wherein the target direction information comprises:
preset first direction information; or
second direction information determined based on a gesture of a target object in the target image.

8. The method of claim 1, wherein mounting the virtual object to the mounting position in the target image comprises:
determining a target orientation of the virtual object based on the position information of the plurality of reference key points; and
mounting the virtual object to the mounting position in the target image according to the target orientation.

9. The method of claim 8, wherein determining the target orientation of the virtual object based on the position information of the plurality of reference key points comprises:
determining at least one reference plane based on the plurality of reference key points, wherein each reference plane is determined based on at least three reference key points in the plurality of reference key points; and
determining the target orientation of the virtual object based on first orientation information of the at least one reference plane.

10. The method of claim 9, wherein determining the target orientation of the virtual object based on the first orientation information of the at least one reference plane comprises:
determining second orientation information of a target reference key point in the plurality of reference key points, a distance from the target reference key point to the expected mounting position of the virtual object being less than a preset distance; and
determining the target orientation of the virtual object based on the first orientation information and the second orientation information.

11. The method of claim 1, wherein determining the mounting position of the virtual object based on the position information of the plurality of reference key points in the target image comprises:
detecting a facial region from the target image; and
determining the mounting position of the virtual object based on the position information of the plurality of reference key points in the target image, in response to a proportion of the facial region in the target image being less than or equal to a threshold.

12. The method of claim 11, further comprising:
determining a position of a predetermined reference key point in the plurality of reference key points as the mounting position of the virtual object, in response to the proportion of the facial region in the target image being greater than the threshold; and
determining an orientation of the predetermined reference key point in the plurality of reference key points as the target orientation of the virtual object; wherein the predetermined reference key point is a reference key point in the plurality of refrence key points that has the shortest distance to the expected mounting position of the virtual object.

13. A method for generating an effect, comprising:
presenting an editing interface for generating a mounting effect;
determining an expected mounting position of a virtual object to be mounted based on input information received in the editing interface;
determining a set of reference key points associated with the expected mounting position, the set of reference key points being used for determining a target mounting position of the virtual object during execution of the mounting effect; and
generating an effect file corresponding to the mounting effect based on the set of reference key points.

14. The method of claim 13, wherein the editing interface presents a reference model and a plurality of key points corresponding to the reference model, and determining the set of reference key points associated with the expected mounting position comprises:
determining, from the plurality of key points, the set of reference key points having distances to the expected mounting position less than a threshold distance, wherein the threshold distance is determined based on user input.

15. The method of claim 14, further comprising:
highlighting the set of reference key points in the plurality of key points in the editing interface.

16. The method of claim 13, further comprising:
determining a set of distances from the expected mounting position to the set of reference key points; and
generating, based on the set of distances, distance description information to indicate relationships among the set of distances, the distance description information being used for determining the target mounting position of the virtual object during execution of the mounting effect.

17. An interaction apparatus, comprising:
a key point determining module configured to detect a plurality of reference key points associated with a virtual object to be mounted from a target image;
a position determining module configured to determine a mounting position of the virtual object based on position information of the plurality of reference key points in the target image; and
a mounting module configured to mount the virtual object to the mounting position in the target image.

18. An apparatus for generating an effect, comprising:
an interface presenting module configured to present an editing interface for generating a mounting effect;
a position marking module configured to determine an expected mounting position of a virtual object to be mounted based on input information received in the editing interface;
a key point marking module configured to determine a set of reference key points associated with the expected mounting position, the set of reference key points being used for determining a target mounting position of the virtual object during execution of the mounting effect; and
an effect generating module configured to generate an effect file corresponding to the mount effect based on the set of reference key points.

19. An electronic device, comprising:
at least one processing unit; and
at least one memory coupled to the at least one processing unit and storing instructions for execution by the at least one processing unit, the instructions, when executed by the at least one processing unit, cause the electronic device to perform the method of any of claims 1 to 12 or 13 to 16.

20. A computer-readable storage medium having stored thereon a computer program executable by a processor to implement the method of any of claims 1 to 12 or 13 to 16.
